# EUROPEAN PATENT SPECIFICATION

(11) **EP 1 574 993 B1**
(45) Date of publication and mention of the grant of the patent: **12.09.2012**
(21) Application number: 04354010.3
(22) Date of filing: 11.03.2004
(51) Int. Cl.: G06T 7/20

(54) **Method and system for estimating motion from a sequence of bidimensional arrays of sampled values, optical mouse including such a system and computer program product therefor**
Computerprogramm, Verfahren und Vorrichtung zur Bewegungsschätzung aus einer Sequenz zweidimensionaler Arrays von Abtastwerten, optische Maus, die eine solche Vorrichtung beinhaltet
Logiciel, procédé et processus d'estimation de mouvement à partir d'une série d'arrays bidimensionelles, souris optique comprenant un tel processus

(43) Date of publication of application: 14.09.2005
(73) Proprietor: STMicroelectronics Srl, 20864 Agrate Brianza (IT); STMicroelectronics SA, F-92120 Montrouge (FR)
(72) Inventor: Rovati, Fabrizio Simone, 20092 Cinisello Balsamo(Milano) (IT); Zambotti, Paolo Sergio, 20132 Milano (IT); Mellot, Pascal Jean, 38250 Lans en Vercors (FR)
(74) Representative: Bosotti, Luciano

(56) References cited:
- EP-A- 1 294 194
- WO-A-03/049018
- US-A- 6 014 181
- US-A1- 2003 189 548
- BUSCHMANN R: "Efficiency of displacement estimation techniques" SIGNAL PROCESSING. IMAGE COMMUNICATION, ELSEVIER SCIENCE PUBLISHERS, AMSTERDAM, NL, vol. 10, no. 1-3, 1 July 1997 (1997-07-01), pages 43-61, XP004082701 ISSN: 0923-5965
- ACAME M ET AL SOCIETY OF PHOTO-OPTICAL INSTRUMENTATION ENGINEERS (SPIE): "Adaptive-size hierarchival block matching for efficient motion compensation of video sequences" ADVANCED IMAGE AND VIDEO COMMUNICATIONS AND STORAGE TECHNOLOGIES. AMSTERDAM, MAR. 20 - 23, 1995, BELLINGHAM, SPIE, US, vol. VOL. 2451, 1995, pages 112-120, XP000732651 ISBN: 0-8194-1802-1

## Description

### Field of the invention

The present invention relates to techniques for estimating motion from a sequence of bidimensional arrays of sampled values such as e.g. video frames.

The invention was developed by paying specific attention to the possible application to estimating global motion in a consecutive stream of pictures taken for example by a camera.

A preferred, yet non-limiting field of application of the invention are optical mouse applications where an optical sensor ("finger sensor") generates a signal comprised of a sequence of bidimensional arrays of sampled values indicative of mouse displacement.

In the following description, such a sequence of bidimensional arrays of sampled values from which motion can be estimated will be briefly referred to as a sequence of "video frames" or "images".

### Description of the related art

A high number of arrangements for motion estimation exist in the art based on complex algorithms that perform phase correlation of images and/or edge detection. These prior art arrangements are essentially penalized by a high computational weight.

Recursive motion estimation is frequently used in digital video encoding techniques, as witnessed e.g. by EP-A-0 917 363 or EP-A-0 944 245.

Specifically, EP-A-1 361 541 proposes a possible application of motion estimation to an optical mouse.

More to the point, EP-A-1 361 541 discloses a method of estimating global motion based on a sequence of subsequent video images (i.e. bidimensional arrays of sampled values), such as those received from an optical mouse for the purposes of detecting its movement. Subsequent video images are represented by digital signals arranged in frames. In order to estimate motion from an array (i.e. frame) with respect to another, the method provides for choosing, from amongst a series of vectors originating from linear combinations of motion vectors resulting from estimates of previous frames and/or constant vectors, a vector considered as the best match for estimating the motion occurring between the two frames. The selection operation in turn includes the operations of:
- performing a virtual overlay of the two frames to be compared mutually offset both horizontally and vertically by amounts identified by the motion vector subject to testing,
- applying a selective grid of pixels to be subject to testing, and
- calculating, for all the pixels selected via the grid, a cost function to determine the effectiveness of the predictor, identifying the vector with the lowest cost function value as the best for the purposes of estimation.

Motion estimation of an object (for instance in an optical mouse) involves estimating the global motion flow intrinsic in a sequence of a subsequent images, that is bidimensional arrays of sampled values. Each frame is generally comprised of few pixels (for instance 20x20), but the frame rate is generally rather high (up to 10,000 frames/second) if swift movements are to be detected.

Using a very high frame rate enables detection of very fast movements. However it turns out to be rather penalizing in so far as usual or slow movements are concerned. In fact, due to the very high sampling rate, the relative displacement between subsequent images when the motion is not particularly fast is just a small fraction of the pixels. This requires a very high degree of accuracy (i.e. precision, resolution) in the estimation, for instance 1/8 or 1/16 pixel.

This gives rise to significant problems when the motion becomes fast: estimating a fast movement with the same, maximum resolution requires a substantial amount of processing.

Just by way of example, detecting movement within a window including +/- 3 pixels with 1/16 resolution requires about ((3+1+3)x16)x((3+1+3)x16) = 12,544 comparisons.

Conversely, a similar estimation with integer (i.e. one pixel) resolution would simply require (3+1+3)x(3+1+3)= 49 comparisons which means that the complexity is 256 times higher in the former case than in the latter previously considered.

Additionally, too high a resolution may produce problems when extensive motion is considered due to sub-pixel interpolation. This is by way of necessity rather rough in the case of low-cost devices such as optical mouses.

Even using a high degree of resolution (with the drawbacks highlighted in the foregoing) a problem remains still to be solved when the motion is so slow that it cannot be estimated even with the maximum resolution available in the device.

Conversely, the opposite case does not apply, namely the case of a movement faster than detectable. In the design phase, the frame rate is selected high enough to include the fastest motion within a given maximum displacement in terms of pixels per frame.

For instance, if motion between 0 and C cm/s must be estimated, the frame rate is selected in such a way that the maximum motion results in a displacement between two subsequent images of - at most - W pixels, W being selected such that it can be correctly estimated with the roughest resolution.

However, the need also arises of estimating speeds approximating the lower limit of the specification, namely speeds in the close proximity of 0. Such speeds give rise to negligible displacements between subsequence frames: these could not be estimated even with a very high resolution that cannot be implemented in practice (1/256, 1/512 and over).

At least in principle, 1/∞ resolution would be required in order to detect motion speeds near 0 by using a fixed frame rate. The practical consequence is that, since the resolution is limited, movements below a certain speed cannot be detected.

More specifically, the invention relates to a method according to the preamble of claim 1, which is known, e.g., from US 2003/1895A8A1.

US-A-6 019 181 is also of interest for the invention.

### Object and summary of the invention

The object of the present invention is thus to provide an improved arrangement dispensing with the drawbacks of the prior art arrangements considered in the foregoing, with special emphasis placed on possible application in an optical mouse context.

According to the present invention, that object is achieved by means of a method having the features set forth in Claim 1 that follows. The invention also relates to a corresponding system, a mouse arrangement including such a system as well as a computer program product loadable in the memory of at least one computer and including software code portions for performing the method of the invention.

A preferred embodiment of the invention is directed to estimating global motion in a consecutive stream of pictures taken from example by a camera. Preferably, this is achieved via a block matching recursive motion estimation technique, with an adaptive estimation arrangement.

The arrangement described herein is particularly adapted for use in new-generation mouses using a video sensor in the place of the ball in order to detect the motion imposed by the user. The arrangement described herein can also be used e.g. in capacitive sensors for acquiring digital fingerprints, new generation telephone terminals, personal digital assistants (PDAs), optical pens for electronic writing. The list reproduced here is obviously non-limiting and this explains i.a. why the annexed claims generally refer to estimating motion from a sequence of bidimensional arrays of sampled values, irrespective of whether these may be termed "images" in a proper sense.

In optical mouse applications, the arrangement described herein derives the motion imposed to the mouse by the user starting from the output frames from a sensor (such as e.g. a video sensor or a camera). As a result of motion, the detector will capture moving images of the surface over which it is moving. Once the relative motion between the two images is detected, a corresponding displacement will be imposed onto the screen pointer controlled by the optical mouse.

Alternatively, one may have to do with an object moving over/under a fixed sensor in order to create moving images. Motion can be reconstructed starting from the relative positions of the subsequent images sampled by the sensor/camera.

In preferred embodiments of the arrangement described herein, the frame rate of the estimation can be selectively changed in order to adapt to the need of estimating high speed, or, alternatively, very slow, detailed motion.

This is done either by selectively "freezing" the updating mechanism of the reference frames used for estimation or by selectively adapting the frame rate of the estimation as a function of the current motion detected.

### Brief description of the annexed drawings

The invention will now be described, by way of example only, by referring to the enclosed figures of drawing, wherein:
- figure 1 schematically shows the possible application of the arrangement described herein to an optical mouse context, and
- figure 2 is a schematic representation of operation of the arrangement described herein.

### Detailed description of preferred embodiments of the invention

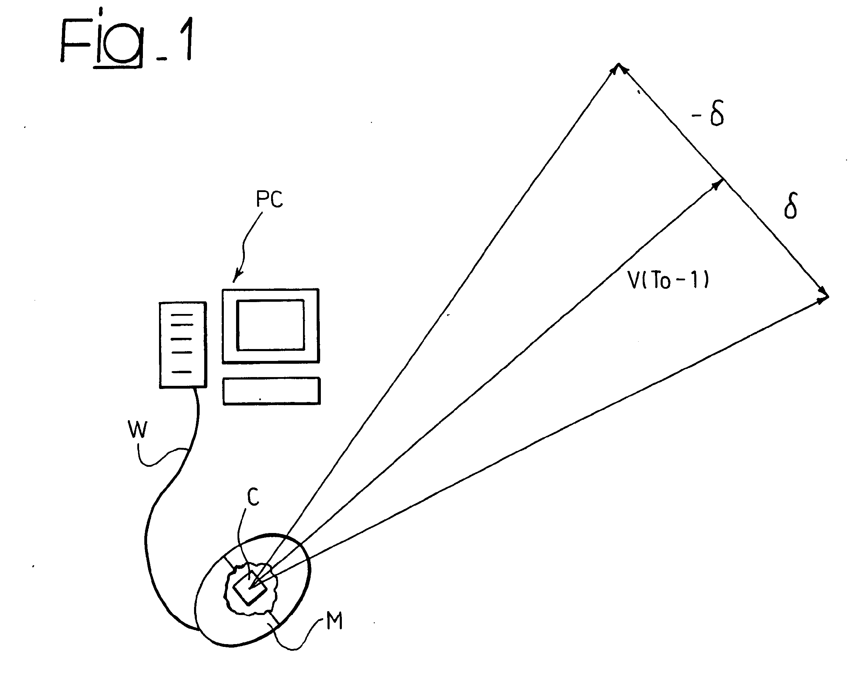

The basic principle of operation of the arrangement shown in figure 1 can be derived from EP-A-1 361 540.

In general terms, with reference to the sketch in Figure 1 and purely by way of example, reference M indicates a mouse associated with a personal computer PC.

Instead of carrying out the function of detecting the motion imparted by the user to the mouse by recognising - as occurs in traditional solutions - the movements imparted to the sphere or ball in the mouse when moving the latter over a contact surface, it is possible to exploit - for the same purposes - the image information supplied by an image sensor - one could naturally think of a web-cam type of (tele)camera - generically indicated as C. This is generally mounted on the mouse M, usually at the underside thereof, where the "ball" or sphere of conventional mouses is arranged.

The mouse M sends the image signal generated by the camera C (capable of adequately defining any image detected within the surrounding environment) to the personal computer PC, upon which the processing functions described in the following are preferable executed. Alternatively, image processing could be performed directly by the mouse, via dedicated circuitry, with only estimated motion information being sent to the PC.

It will be appreciated that the sensor C can be configured in a manner to supply images in digital format directly in output, ready for transmission to the personal computer PC via any type of connection (indicated in the example herein in the form of a cable W) existing between the mouse M and the personal computer PC. The sensor C does not necessarily need to be a camera, and could be some other type of sensor, even based on other physical principles, but suitable for supplying an array of N values/pixels in output, 20x20 for example, which can be used as frames.

In more general terms, the "video frames" referred to herein are thus exemplary of a sequence of bidimensional arrays of sampled values as generated by the sensor C, irrespective of whether these can be properly regarded as constituting "video signals" or "images".

Moreover, as already stated, the motion detection application for a mouse only constitutes one of the numerous possible applications of the solution according to the invention. For other examples - which it should be remembered are just that - of possible applications of the solution according to the invention, please refer to the introductory part of this description.

Turning again to the example of the mouse M in Figure 1, the movements imparted to the mouse M by the user result in the sensor C sampling and generating a series of digital video images, typically organised in frames, this terminology being obviously derived from television signal processing technology.

The (relative) movement estimate of the said frames generated by the sensor C can be converted (according to known criteria and therefore not requiring a detailed description in this context) into an estimate of the movement of the sensor C and, in consequence, of the mouse M as a whole.

Estimates are typically carried out on the frames sampled by the sensor C starting from the video signal generated by the sensor C. Each frame is estimated with respect to one or more preceding "reference" frames, for example (but not necessarily) with respect to the immediately preceding one.

Each vector is thus expressed in coordinates having a precision in fractions of a pixel, according to the implementation and depending to the desired precision of estimation. Pixels with a non-integer precision can be derived via known standard interpolation techniques, such as a simple two-dimensional linear interpolation for example.

As well known in the art (see, for instance EP-A-1 361 541) a typical procedure applied for each estimate of a frame with respect to a reference frame is a follows.

Starting vectors are constructed, in a known manner and therefore not requiring a detailed description in this context, starting from the last K winning vectors. In practice, the last K winners are stored in a FIFO (First In First Out) memory and the below described linear combinations applied (e.g. for constant acceleration, the difference between the last and penultimate winners is added to the last winner).

The digital video signal is then analysed by considering a series (consisting of a variable number of readers from 0 to N) of vectors originating from linear combinations of vectors produced by previous frame estimates (so-called SEED vectors) and/or constant vectors). The series is subjected to a selection process to determine which vector is the best for estimating the motion that has effectively occurred between the two frames.

For instance, where V(t) is an estimated vector for indicating the motion between the frame t and the frame t-1, some (non exhaustive) examples of what these SEED vectors could be are given below - naturally with reference to the movement estimate for frame T₀:
- constant velocity vector, last: V(T₀-1),
- constant velocity vector, penultimate: V(T₀-2),
- constant velocity vector, last but two: V(T₀-3),
- constant acceleration vector: V(T₀-1)+(V(T₀-1)-V(T₀-2)),
- constant deceleration vector: V(T₀-1)-(V(T₀-1)-V(T₀-2)),
- null vector: (0,0),
- circular acceleration vector, first: V(T₀-1)+δ, where δ is an integer vector orthogonal to V(T₀-1): see Figure 1, and
- circular acceleration vector, second: V(T₀-1)-δ: see Figure 1.

It should be clearly noted that the identification number of the individual SEED vectors could dynamically change over time, following measurements related to operating conditions (estimated motion is null, slow, rapid etc.).

Mentioning the possibility of performing motion estimation on the basis of different types of vectors as indicated in the (exemplary) list above is significant insofar as the invention described herein is per se applicable to any kind of motion estimation process.

Additionally, it will be appreciated that, as used herein, "motion" and "motion estimation" generally indicate the difference(s) and the corresponding estimation processes that may be performed, in a manner known by itself, over a sequence of bidimensional arrays of sampled values irrespective of whether these represent "images" in a proper sense.

More to the point, it will be appreciated that in many of the applications previously referred to (the computer mouse application example being valid for all), estimated null motion can assume a significant role, as it corresponds to all situations in which the mouse M is not being used by the user or is moved so slowly that movement is not detected.

Consequently, reference - as repeatedly made in this description and in the claims that follow - to at least one of the components of a motion vector estimated being "null" is clearly to be understood as related -- to the result of estimation.

Stated otherwise, in the case of very slow motion, at least one of the component of the motion vector estimated (however selected) may in fact be "null", when the corresponding component of physical motion is in fact non-null, but simply so small that it cannot be detected in view of the degree of resolution of detection. Consequently, a non-null component of a very slow motion may well result in a null component in the estimated motion vector. A basic object of the arrangement described herein is just to ensure that even these very slow motion components can be properly detected and accounted for without having to unduly increase detection resolution, as this would result in the drawbacks outlined in the introductory portion of this description.

Essentially, the arrangement described herein is in a position to overcome the intrinsic limitation of the prior art and to approximate in an appreciable manner the actual motion to which the mouse is subjected even for very slow motion, that is for speeds approaching 0.

Essentially, a first embodiment of the arrangement described herein is based on a sort of adaptive "freezing" of the reference frame (array) as long as at least one (or both - depending on the implementation) of the components of the estimated motion vector are not different from 0, i.e. null.

For instance, a motion of 1/256 pixel cannot be detected by an estimator having a resolution 1/16. Without specific arrangements, the motion estimator will provide continuously a null estimation of the speed.

The basic arrangement described in EP-A-1 361 541 assumes that each estimation is made on the immediately preceding frame. That is, at each estimation step the frame to be estimated is substituted for the reference frame: at the time 0, the frame 1 is estimated with reference to the frame 0, than the frame 2 is estimated using the frame 1 as a reference and so on.

A first embodiment of the arrangement described herein provides for the reference frame being selectively "freezed", so that motion may be estimated not on the basis of e.g. the previous frame, but rather on the basis of the 2nd, 3rd, 4th, ..., N-th preceding frame (that is a frame 2, 3, 4, ..., N positions upstream in the frame sequence) so that motion taking place over that time is accumulated/integrated until the detection threshold is reached.

In the exemplary case considered in the foregoing (i.e. a motion of 1/256 pixel cannot be detected by an estimator having an resolution 1/16), this will occur after 16 frames.

Of course, attention must be paid in avoiding motion over-estimation, i.e. integrating several times the same contribution. If estimation were always carried out on the N-preceding frame, one would finally have an overestimation of movement of a factor N on the average.

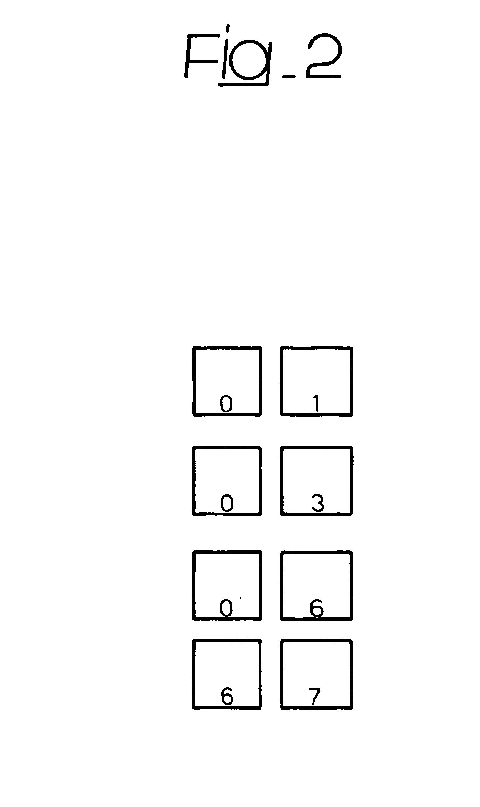

A preferred embodiment of the arrangement described herein provides for estimation being carried out as shown in figure 2.

Essentially, figure 2 can be regarded as the representation of a sequence of frames to be analysed in a lexicographic order with the current frame and the reference frame being shown side-by-side.

As a first step (reset), frame 1 is estimated over frame 0. If the estimation gives a null result (or, alternatively, at least one of the components of the estimated motion vector is 0) the value (0,0) is given as the result of motion estimation and the subsequent estimation is performed, without changing the reference frame.

This is the case also for the situation where just one the components of the estimated motion vector is 0.

Specifically, by way of example, one can imagine motion to be 1/48 pixel (a constant speed is assumed), in the horizontal direction, within an estimation process having a resolution of 1/8.

During the first estimation ("1-ON-0"), the resulting motion vector is 0 in both the x and y directions. Consequently, frame 0 is kept as a reference.

The subsequent estimation is performed for frame 2 over frame 0 (i.e."2-ON-0"). The net effect of such a conservation of the reference frame (in the instant case the frame 0) is to "integrate" the motion taking place from frame 0 to frame 1 and from frame 1 to frame 2, due to the sum of the displacements.

For instance, in the second line of figure 2, one sees the status after motion has been estimated null during estimations "1-ON-0", "2-ON-0", by keeping frame 0 as the reference; the same reference frame is kept thus adding up the motions taking place since the frame 0 was captured.

During the first estimation, the resulting motion vector was 0 in both the x and y directions. Consequently, frame 0 has been kept as a reference.

The result of the subsequent estimation between frame 0 and frame 3 ("3-ON-0") will be 3/48, i.e. the integration of 1/48 displacement per picture integrated over three frames, still too low to be detected.

The estimation result will be null again and frame 0 will still be kept as a reference, by discarding frame 3.

Estimation is continued on the frame 0 thus giving a null motion as an output until a motion is detected in at least one of the components (or, alternatively, on both components) of the motion vector estimated.

At that point, the motion taking place from the frame 0 and the current frame has been integrated enough to become detectable, whereby the detection obtained is a faithful representation of reality.

For instance, by referring to the third line in figure 2, motion between the current and the reference frame is shown to be 6/48=1/8, thus permitting detection, and the output vector will be 1 in the x direction. At that point the choice can be made of updating the reference frame.

The subsequent estimation will therefore use frame 6 as the reference (fourth line in figure 2).

In brief, operation of the arrangement just described can be summarised as follows:
- motion estimation is performed between the last frame detected by the sensor and a reference frame.
- if the motion vector estimated has both components that are null, the reference frame is not updated and a null motion (0,0) is given as an output;
- otherwise, the motion vector detected is provided as an output and a reference frame is updated using the latest frame acquired.

Alternatively, the arrangement described herein can be performed as a variant by performing motion estimation between the last frame detected by the sensor and reference frame and, if the motion vector estimated has at least one component that is null, the reference frame is not updated and null motion (0,0) is given as the output. Alternatively, the motion detected is given as an output and the reference frame is updated using the latest frame acquired.

According to the invention, another possible implementation of the arrangement described herein is based on a sensor having adaptive frame rates. In that case, the sensor (such as the camera C in figure 1) will have a variable acquisition speed.

Consequently, in the place of "simulating" a different frame rate by freezing the reference frame, one can directly produce a variation of the frame rate in the sensor.

If, after motion estimation between the latest frame detected by the sensor and the reference frame the motion vector estimated has at least one (namely one or both) motion components that have a null value, a null motion (0,0) is given as an output while the reference frame rate can be reduced, e.g. by one "step". Conversely, if the motion vector estimated has at least one (namely one or both) motion components higher than a given threshold S, the reference frame rate is increased e.g. by one step, while giving the estimated motion as the output. Otherwise, the motion detected is given as an output without updating the frame rate.

The actual meaning of "step" in terms of frame rate increase/decrease can be different depending on the variation capabilities of the sensor. Alternatively, it can be predetermined at the design stage (for instance halving/doubling the frame rate).

Of course, the metrics used for controlling the frame rate change can be modified. For instance, the possibility exist of averaging the result of the last N estimations, and then calculating (maxima, minima or other mathematical functions) on a set of N previous values without modifying the basic structure of the arrangement described herein.

The arrangement described herein solves the problems related to slow motion as discussed in the introductory portion of this description.

The possibility also exists of coupling the arrangement described herein with an arrangement whereby resolution is made adaptive as described in EP-A-1574994, filed on even date by the same applicants. Specifically that arrangement includes the step of generating estimated motion vectors having two components along two reference axes (x, y), motion estimation being performed with a given resolution, and includes at least one, and preferably both of:
- dynamically varying the estimation resolution between subsequent estimation steps, and
- selectively varying the resolution of motion estimation independently along said two axes.

Being complementary, these two arrangements can be used disjointly or jointly in order to achieve the maximum degree of estimation quality. This both in the case of motion having different speeds over the two axes, and in the case of slow motion along both axes.

In the specific case, if adaptive resolution is applied to the arrangement described herein, the additional advantage is achieved of being able to use in any case a finer resolution for estimation, thus detecting slow motion in a less rough manner.

In fact, without adaptive resolution, one is constrained to fix an average resolution (for instance 1/4 pixel) once for all. This means that if, say, 1/256 pixel motion is to be detected, integration will have to be performed over at least 64 images, each involving a displacement of 1/4 pixel.

If adaptive resolution is available, the possibility will exist of selecting in the maximum resolution (for instance 1/64) in the case of slow motion, thus representing motion in more detailed manner using a "quantum" equal to 1/64, with an output value every four images on the average.

The arrangement described herein can be used also in other contexts where motion estimation (possibly with adaptive resolution) is performed. For instance, in the place of an optical sensor, one may use sensors based on different principles (for instance a capacitive sensor for a fingerprint detection).

The arrangement described herein can also be used in the area of digital video processing (for instance for moto-compensated frame rate conversion) and encoding (for instance full-pixel, half-pixel or quarter-pixel motion estimation as is the case of e.g. MPEG-2, MPEG-4 and H.264).

Obviously, the basic principles of the invention remaining the same, the details and embodiment may vary, also significantly, with respect to what has been described by way of example only, without departing from the scope of the invention as defined by the annexed claims.

## Claims

1. A method for estimating motion from a sequence of bidimensional arrays of sampled values, including the step of performing motion estimation (PC) between a current array and a reference array in said sequence to derive an estimated motion vector (V), **characterized in that** the method includes:
- if at least one of the components of said estimated motion vector is null, performing the step of reducing the rate of acquisition of said arrays of said sequence of arrays.

2. The method of claim 1, **characterised in that** said step of reducing is performed if both components of said estimated motion vector are null.

3. The method of either of claims 1 or 2, **characterized in that** it includes, if said step of reducing is performed, the step of generating a null motion signal (0,0).

4. The method of claim 1, **characterized in that** said step of reducing the array acquisition rate involves at least one of:
- reducing said array acquisition rate by a given step,
- halving said array acquisition rate,
- reducing said array acquisition rate to a minimum of a set of previous values of said array acquisition rate.

5. The method of any of claims 1 to 4, **characterized in that** it includes, if said estimated motion vector has both components that are non-null, the step of substituting said current array for said reference array for motion estimation with a further array in said sequence.

6. The method of any of claims 1 to 5, **characterized in that** it includes, if said estimated motion vector has both components that are non-null, at least one of the steps of:
- increasing the array acquisition rate of said array sequence, and
- maintaining unaltered the array acquisition rate of said array sequence.

7. The method of claim 6, **characterized in that** said step of increasing said array acquisition rate involves at least one of:
- increasing said array acquisition rate by a given step,
- doubling said array acquisition rate,
- increasing said array acquisition rate to a maximum of a set of previous values for said array acquisition rate.

8. The method of any of claims 5 to 7, **characterized in that** it includes the step of outputting a non-null motion signal.

9. The method of any of the previous claims, **characterized in that** it includes the step of generating estimated motion vectors having at least one component along at least one reference axis (x, y), said motion estimation being performed with a given resolution, the method including at least one of:
- dynamically varying said resolution between subsequent estimation steps, and
- if said estimated motion vectors have two components along two reference axes (x, y), selectively varying the resolution of motion estimation independently along said two axes (x, y).

10. A system for estimating motion from a sequence of bidimensional arrays of sampled values, including a motion estimator (PC) configured for performing motion estimation between a current array and a reference array in said sequence to derive an estimated motion vector (V), **characterised in that** said motion estimator (PC) is configured for performing, if at least one of the components of said estimated motion vector is null, the step of reducing the rate of acquisition of said arrays of said sequence of arrays.

11. The system of claim 10, **characterised in that** said motion estimator (PC) is configured for performing said step of reducing if both components of said estimated motion vector are null.

12. The system of either of claims 10 or 11, **characterized in that** said motion estimator (PC) is configured for generating a null motion signal (0,0) if said step of reducing is performed.

13. The system of claim 10, **characterized in that** said motion estimator (PC) is configured for reducing the array acquisition rate by at least one of:
- reducing said array acquisition rate by a given step,
- halving said array acquisition rate,
- reducing said array acquisition rate to a minimum of a set of previous values of said array rate.

14. The system of any of claims 10 to 13, **characterized in that** said motion estimator (PC) is configured for substituting said current array for said reference array for motion estimation with a further array in said sequence if said estimated motion vector has both components that are non-null.

15. The system of any of claims 10 to 14, **characterized in that** said motion estimator (PC) is configured for checking if said estimated motion vector has both components that are non-null, and performing, if said estimated motion vector has both components that are non-null, at least one of the steps of:
- increasing the array acquisition rate of said array sequence, and
- maintaining unaltered the array acquisition rate of said array sequence.

16. The system of claim 15, **characterized in that** said motion estimator (PC) is configured for increasing said array acquisition rate by at least one of:
- increasing said array acquisition rate by a given step,
- doubling said array acquisition rate,
- increasing said array acquisition rate to a maximum of a set of previous values for said array acquisition rate.

17. The system of any of claims 14 to 16, **characterized in that** said motion estimator (PC) is configured for outputting a non-null motion signal.

18. The system of any of the previous claims 10 to 17, **characterized in that** said motion estimator (PC) is configured for generating estimated motion vectors having two components along two reference axes (x, y), said motion estimation being performed with a given resolution, the motion estimator (PC) being configured for performing at least one of the steps of:
- dynamically varying said resolution between subsequent estimation steps, and
- if said estimated motion vectors have two components along two reference axes (x, y), selectively varying the resolution of motion estimation independently along said two axes (x, y).

19. The system of any of claims 10 to 18, in combination with an optical sensor (C) configured for generating said array sequence.

20. An optical mouse (M) including a system according to any of claims 10 to 19.

21. A computer program product loadable in the memory of at least one computer and including software code portions for performing the method of any of claims 1 to 9 when the product is run on a computer.

## Patentansprüche

1. Verfahren zur Bewegungsabschätzung aus einer Sequenz bidimensionaler Arrays von Abtastwerten, einschließlich des Schrittes des Ausführens einer Bewegungsabschätzung (PC) zwischen einem gegenwärtigen Array und einem Bezugs-Array in der Sequenz zum Ableiten eines abgeschätzten Bewegungsvektors (V),
**dadurch gekennzeichnet, dass** das Verfahren beinhaltet:
- Ausführen des Schrittes der Verminderung der Rate der Erlangung der Arrays aus der Sequenz von Arrays, wenn mindestens eine der Komponenten des abgeschätzten Bewegungsvektors gleich Null ist.

2. Verfahren nach Anspruch 1, **dadurch gekennzeichnet, dass** der Verminderungsschritt ausgeführt wird, wenn beide Komponenten des abgeschätzten Bewegungsvektors gleich Null sind.

3. Verfahren entweder nach Anspruch 1 oder 2, **dadurch gekennzeichnet, dass** es den Schritt des Erzeugens eines Nullbewegungs-Signals (0,0) beinhaltet, wenn der Verminderungsschritt ausgeführt wird.

4. Verfahren nach Anspruch 1, **dadurch gekennzeichnet, dass** der Schritt des Verminderns der Rate, mit der Arrays erlangt werden, mindestens einen der folgenden Schritte beinhaltet:
- Vermindern der Array-Akquisitionsrate durch einen gegebenen Schritt,
- Halbieren der Array-Akquisitionsrate,
- Vermindern der Array-Akquisitionsrate auf einen Minimalwert einer Menge vorheriger Werte der Array-Akquisitionsrate.

5. Verfahren nach irgendeinem der Ansprüche 1 bis 4, **dadurch gekennzeichnet, dass** es den Schritt des Substituierens des gegenwärtigen Arrays durch das Bezugs-Array zwecks Bewegungsabschätzung mit einem weiteren Array in der Sequenz beinhaltet, wenn der abgeschätzte Bewegungsvektor beide Komponenten ungleich Null aufweist.

6. Verfahren nach irgendeinem der Ansprüche 1 bis 5, **dadurch gekennzeichnet, dass** es mindestens einen der folgenden Schritte beinhaltet, wenn der abgeschätzte Bewegungsvektor beide Komponenten ungleich Null aufweist:
- Erhöhen der Array-Akquisitionsrate der Array-Sequenz und
- Aufrechterhalten der unveränderten Array-Akquisitionsrate der Array-Sequenz.

7. Verfahren nach Anspruch 6, **dadurch gekennzeichnet, dass** der Schritt des Erhöhens der Array-Akquisitionsrate mindestens einen von den folgenden Schritten involviert:
- Erhöhen der Array-Akquisitionsrate durch einen gegebenen Schritt,
- Verdoppeln der Array-Akquisitionsrate,
- Erhöhen der Array-Akquisitionsrate auf einen Maximalwert einer Menge von vorherigen Werten der Array-Akquisitionsrate.

8. Verfahren nach irgendeinem der Ansprüche 5 bis 7, **dadurch gekennzeichnet, dass** es den Schritt des Ausgebens eines von Null verschiedenen Bewegungssignals beinhaltet.

9. Verfahren nach irgendeinem der vorstehenden Ansprüche, **dadurch gekennzeichnet, dass** es den Schritt des Erzeugens abgeschätzter Bewegungsvektoren mit mindestens einer Komponente entlang mindestens einer Bezugsachse (x, y) beinhaltet, wobei die Bewegungsabschätzung mit einer gegebenen Auflösung ausgeführt wird, wobei das Verfahren mindestens einen der folgenden Schritte beinhaltet:
- Dynamisches Variieren der Auflösung zwischen aufeinanderfolgenden Abschätzungsschritten, und
- selektives Variieren der Auflösung der Bewegungsabschätzung unabhängig entlang der beiden Achsen (x, y), wenn die abgeschätzten Bewegungsvektoren zwei Komponenten entlang zweier Bezugsachsen (x, y) aufweisen.

10. System zur Bewegungsabschätzung aus einer Sequenz bidimensionaler Arrays abgetasteter Werte mit einem Bewegungsabschätzer (PC), der zum Ausführen von Bewegungsabschätzungen zwischen einem gegenwärtigen Array und einem Bezugs-Array aus der Sequenz konfiguriert ist, um einen abgeschätzten Bewegungsvektor (V) abzuleiten, **dadurch gekennzeichnet, dass** der Bewegungsabschätzer (PC) zum Ausführen des Schrittes des Verminderns der Rate der Akquisition der Arrays der Sequenz von Arrays konfiguriert ist, wenn mindestens eine der Komponenten des abgeschätzten Bewegungsvektors gleich Null ist.

11. System nach Anspruch 10, **dadurch gekennzeichnet, dass** der Bewegungsabschätzer (PC) zum Ausführen des Verminderungsschrittes konfiguriert ist, wenn beide Komponenten des abgeschätzten Bewegungsvsektors gleich Null sind.

12. System entweder nach Anspruch 10 oder 11, **dadurch gekennzeichnet, dass** der Bewegungsabschätzer (PC) zum Erzeugen eines Nullbewegungssignals (0,0) konfiguriert ist, wenn der Verminderungsschritt ausgeführt wird.

13. System nach Anspruch 10, **dadurch gekennzeichnet, dass** der Bewegungsabschätzer (PC) zum Vermindern der Array-Akquisitionsrate durch mindestens einen Schritt von den folgenden Schritten konfiguriert ist:
- Vermindern der Array-Akquisitionsrate durch einen gegebenen Schritt,
- Halbieren der Array-Akquisitionsrate,
- Vermindern der Array-Akquisitionsrate auf einen Minimalwert einer Menge von vorherigen Werten der Array-Rate.

14. System nach irgendeinem der Ansprüche 10 bis 13, **dadurch gekennzeichnet, dass** der Bewegungsabschätzer (PC) zum Substituieren des gegenwärtigen Arrays durch das Bezugs-Array zwecks Bewegungsabschätzung mit einem weiteren Array in der Sequenz konfiguriert ist, wenn der abgeschätzte Bewegungsvektor beide Komponenten ungleich Null aufweist.

15. System nach irgendeinem der Ansprüche 10 bis 14, **dadurch gekennzeichnet, dass** der Bewegungsabschätzer (PC) zum Überprüfen konfiguriert ist, ob der abgeschätzte Bewegungsvektor beide Komponenten ungleich Null aufweist, und zum Ausführen mindestens eines Schrittes von den folgenden Schritten konfiguriert ist, wenn der abgeschätzte Bewegungsvektor beide Komponenten ungleich Null aufweist:
- Erhöhen der Array-Akquisitionsrate der Array-Sequenz, und
- Aufrechterhalten der unveränderten Akquisitionsrate der Array-Sequenz.

16. System nach Anspruch 15, **dadurch gekennzeichnet, dass** der Bewegungsabschätzer (PC) zum Erhöhen der Array-Akquisitionsrate durch mindestens einen Schritt von den folgenden Schritten konfiguriert ist:
- Erhöhen der Arrays-Akquisitionsrate durch einen gegebenen Schritt,
- Verdoppeln der Array-Akquisitionsrate,
- Erhöhen der Array-Akquisitionsrate auf ein Maximum aus einer Menge von vorherigen Werten für die Array-Akquisitionsrate.

17. System nach irgendeinem der Ansprüche 14 bis 16, **dadurch gekennzeichnet, dass** der Bewegungsabschätzer (PC) zum Ausgeben eines von Null verschiedenen Bewegungssignals konfiguriert ist.

18. System nach irgendeinem der vorstehenden Ansprüche 10 bis 17, **dadurch gekennzeichnet, dass** der Bewegungsabschätzer (PC) zum Erzeugen abgeschätzter Bewegungsvektoren mit zwei Komponenten entlang von zwei Bezugsachsen (x, y) konfiguriert ist, wobei die Bewegungsabschätzung mit einer gegebenen Auflösung ausgeführt wird, wobei der Bewegungsabschätzer (PC) zum Ausführen mindestens eines Schrittes der folgenden Schritte konfiguriert ist:
- Dynamisches Variieren der Auflösung zwischen aufeinanderfolgenden Abschätzungsschritten, und
- Selektives Variieren der Auflösung der Bewegungabschätzung unabhängig entlang der beiden Achsen (x, y) wenn die abgeschätzten Bewegungsvektoren zwei Komponenten entlang zweier Bezugsachsen (x, y) aufweisen.

19. System nach irgendeinem der Ansprüche 10 bis 18, in Kombination mit einem optischen Sensor (C), der zum Erzeugen der Array-Sequenz konfiguriert ist.

20. Eine optische Maus (M) mit einem System entsprechend irgendeinem der Ansprüche 10 bis 19.

21. Computerprogrammprodukt, das in den Speicher von mindestens einem Computer ladbar ist und Softwarecodeteile zum Ausführen des Verfahrens irgendeiner der Ansprüche 1 bis 9 beinhaltet, wenn das Produkt auf einem Computer zum Ablauf gebracht wird.

## Revendications

1. Procédé pour estimer un mouvement à partir d'une suite de matrices bidimensionnelles de valeurs échantillonnées, comportant l'étape d'exécution d'estimation de mouvement (PC) entre une matrice instantanée et une matrice de référence faisant partie de ladite suite afin de dériver un vecteur de mouvement estimé (V), le procédé étant **caractérisé en ce qu'**il comporte :
- si au moins une des composantes dudit vecteur de mouvement estimé est égale à zéro, l'exécution de l'étape de réduction du rythme d'acquisition desdits matrices de ladite série de matrices.

2. Procédé selon la revendication 1, **caractérisé en ce que** ladite étape de réduction est exécutée si les deux composantes dudit vecteur de mouvement estimé sont égales à zéro.

3. Procédé selon la revendication 1 ou la revendication 2, **caractérisé en ce qu'**il comporte, si ladite étape de réduction est exécutée, l'étape de production d'un signal de mouvement zéro (0, 0).

4. Procédé selon la revendication 1, **caractérisé en ce que** ladite étape de réduction du rythme d'acquisition de matrices implique au moins l'une des opérations suivantes :
- réduction dudit rythme d'acquisition de matrices par une étape donnée,
- division par deux dudit rythme d'acquisition de matrices,
- réduction dudit rythme d'acquisition de matrices à un minimum d'un ensemble de valeurs antérieures dudit rythme d'acquisition de matrices.

5. Procédé selon l'une quelconque des revendications 1 à 4, **caractérisé en ce qu'**il comporte, si les deux composantes dudit vecteur de mouvement estimé sont différentes de zéro, l'étape de substitution de ladite matrice instantanée à ladite matrice de référence pour l'estimation de mouvement avec une autre matrice de ladite suite.

6. Procédé selon l'une quelconque des revendications 1 à 5, **caractérisé en ce qu'**il comporte, si les deux composantes dudit vecteur de mouvement estimé sont différentes de zéro, au moins une des étapes de :
- augmentation du rythme d'acquisition de matrices de ladite suite de matrices, et
- maintien sans changement du rythme d'acquisition de matrices de ladite suite de matrices.

7. Procédé selon la revendication 6, **caractérisé en ce que** ladite étape d'augmentation dudit rythme d'acquisition de matrices implique au moins l'une des opérations suivantes :
- augmentation dudit rythme d'acquisition de matrices par une étape donnée,
- doublement dudit rythme d'acquisition de matrices,
- augmentation dudit rythme d'acquisition de matrices jusqu'à un maximum d'un ensemble de valeurs antérieures pour ledit rythme d'acquisition de matrices.

8. Procédé selon l'une quelconque des revendications 5 à 7, **caractérisé en ce qu'**il comporte l'étape de délivrance de signal de mouvement différent de zéro.

9. Procédé selon l'une quelconque des revendications précédentes, **caractérisé en ce qu'**il comporte l'étape de production de vecteurs de mouvement estimé ayant au moins une composante sur au moins un axe de référence (x, y), ladite estimation de mouvement étant effectuée avec une résolution donnée, le procédé comportant au moins une des opérations suivantes :
- variation dynamique de ladite résolution entre des étapes d'estimation successives, et
- si lesdits vecteurs de mouvement estimé ont deux composantes sur au moins un axe de référence (x, y), variation sélective de la résolution d'estimation de mouvement d'une manière indépendante sur lesdits deux axes (x, y).

10. Système pour estimer un mouvement à partir d'une suite de matrices bidimensionnelles de valeurs échantillonnées, comportant un estimateur de mouvement (PC) conçu de manière à exécuter une estimation de mouvement entre une matrice instantanée et une matrice de référence faisant partie de ladite série afin de dériver un vecteur de mouvement estimé (V), **caractérisé en ce que** ledit estimateur de mouvement (PC) est conçu de manière à exécuter, si au moins une des composantes dudit vecteur de mouvement estimé est égale à zéro, l'étape de réduction du rythme d'acquisition desdits matrices de ladite série de matrices.

11. Système selon la revendication 10, **caractérisé en ce que** ledit estimateur de mouvement (PC) est conçu pour exécuter ladite étape de réduction si les deux composantes dudit vecteur de mouvement estimé sont égales à zéro.

12. Système selon la revendication 10 ou la revendication 11, **caractérisé en ce que** ledit estimateur de mouvement est conçu pour produire un signal de mouvement zéro (0, 0) si ladite étape de réduction est exécutée.

13. Système selon la revendication 10, **caractérisé en ce que** ledit estimateur de mouvement (PC) est conçu pour réduire le rythme d'acquisition de matrices par au moins l'une des opérations suivantes :
- réduction dudit rythme d'acquisition de matrices par une étape donnée,
- division par deux dudit rythme d'acquisition de matrices,
- réduction dudit rythme d'acquisition de matrices à un minimum d'un ensemble de valeurs antérieures dudit rythme d'acquisition de matrices.

14. Système selon l'une quelconque des revendications 10 à 13, **caractérisé en ce que** ledit estimateur de mouvement (PC) est conçu pour substituer ladite matrice instantanée à ladite matrice de référence pour l'estimation de mouvement avec une autre matrice de ladite suite si les deux composantes dudit vecteur de mouvement estimé sont différentes de zéro.

15. Système selon l'une quelconque des revendications 10 à 14, **caractérisé en ce que** ledit estimateur de mouvement (PC) est conçu pour vérifier si les deux composantes dudit vecteur de mouvement estimé sont différentes de zéro, et exécuter, si les deux composantes dudit vecteur de mouvement estimé sont différentes de zéro, au moins une des étapes de :
- augmentation du rythme d'acquisition de matrices de ladite suite de matrices, et
- maintien sans changement du rythme d'acquisition de matrices de ladite suite de matrices.

16. Système selon la revendication 15, **caractérisé en ce que** ledit estimateur de mouvement (PC) est conçu pour accroître ledit rythme d'acquisition de matrices par au moins l'une des opérations suivantes :
- augmentation dudit rythme d'acquisition de matrices par une étape donnée,
- doublement dudit rythme d'acquisition de matrices,
- augmentation dudit rythme d'acquisition de matrices jusqu'à un maximum d'un ensemble de valeurs antérieures pour ledit rythme d'acquisition de matrices.

17. Système selon l'une quelconque des revendications 14 à 16, **caractérisé en ce que** ledit estimateur de mouvement (PC) est conçu pour délivrer un signal de mouvement différent de zéro.

18. Système selon l'une quelconque des revendications 10 à 17, **caractérisé en ce que** ledit estimateur de mouvement (PC) est conçu pour produire des vecteurs de mouvement estimé ayant deux composantes sur deux axes de référence (x, y), ladite estimation de mouvement étant effectuée avec une résolution donnée, l'estimateur de mouvement (PC) étant conçu pour exécuter au moins une des opérations suivantes :
- variation dynamique de ladite résolution entre des étapes d'estimation successives, et
- si lesdits vecteurs de mouvement estimé ont deux composantes sur deux axes de référence (x, y), variation sélective de la résolution d'estimation de mouvement d'une manière indépendante sur lesdits deux axes (x, y).

19. Système selon l'une quelconque des revendications 10 à 18, en combinaison avec un estimateur de mouvement (PC) conçu pour produire ladite suite de matrices.

20. Souris optique (M) comportant un système selon l'une quelconque des revendications 10 à 19.

21. Produit sous forme de programme informatique chargeable dans la mémoire d'au moins un ordinateur et comportant des parties de code logiciel pour mettre en oeuvre le procédé selon l'une quelconque des revendications 1 à 9 lorsque le produit est amené à fonctionner dans un ordinateur.
